# EUROPÄISCHE PATENTSCHRIFT

(11) **EP 2 212 157 B1**
(45) Veröffentlichungstag und Bekanntmachung des Hinweises auf die Patenterteilung: **29.05.2013**
(21) Anmeldenummer: 08850332.1
(22) Anmeldetag: 13.11.2008
(51) Int. Cl.: B60R 11/02, B60K 35/00, B60K 37/06

(54) **ANZEIGEEINRICHTUNG IN EINEM KRAFTFAHRZEUG**
DISPLAY DEVICE IN A MOTOR VEHICLE
DISPOSITIF D'AFFICHAGE POUR UN VEHICULE AUTOMOBILE

(30) Priorität: 16.11.2007 DE 102007055246
(43) Veröffentlichungstag der Anmeldung: 04.08.2010
(73) Patentinhaber: Brose Fahrzeugteile GmbH & Co. KG, Coburg, 96450 Coburg (DE); Audi AG, 85045 Ingolstadt (DE)
(72) Erfinder: KARSCH, Hans-Ulrich, 96271 Grub am Forst (DE); MACHT, Alwin, 96250 Ebensfeld (DE); STEGNER, Daniela, 96465 Neustadt (DE); ROSS, Steffen, 85139 Wettstetten (DE); WÜST, Sabine, 85051 Ingolstadt (DE); POSSLER, Hans, 85139 Wettstetten (DE)
(74) Vertreter: Gottschald, Jan
(86) Internationale Anmeldenummer: PCT/EP2008/009611
(87) Internationale Veröffentlichungsnummer: WO 2009/062720

(56) Entgegenhaltungen:
- EP-A- 0 438 657
- DE-A1-102005 038 431
- DE-A1-102005 052 031
- DE-B3-102005 023 578
- US-A1- 2003 196 383
- US-A1- 2007 030 647

## Beschreibung

Die Erfindung betrifft eine Anzeigeeinrichtung in einem Kraftfahrzeug gemäß dem Oberbegriff von Anspruch 1 sowie ein Verstellantriebssystem einer solchen Anzeigeeinrichtung gemäß dem Oberbegriff von Anspruch 24.

Die in Rede stehende Anzeigeeinrichtung ist üblicherweise in einem Armaturenbrett oder im Bereich eines Armaturenbretts angeordnet, das sich im Innenraum eines Kraftfahrzeugs befindet. Die Anzeigeeinrichtung weist einen verstellbaren Monitor auf, der üblicherweise als LCD-Display ausgestaltet ist.

Solche Anzeigeeinrichtungen können zu unterschiedlichen Zwecken eingesetzt werden. Darunter fällt die Anzeige von Navigationsinformationen, von Fahrzeugszustandsinformationen oder von Audioinformationen. Oftmals dient die Anzeigeeinrichtung nicht nur zur Anzeige, sondern auch zur Eingabe von Informationen. Hierfür kann es vorgesehen sein, daß zusätzliche Bedienelemente an der Anzeigeeinrichtung vorgesehen sind. Verschiedentlich ist die Anzeigeeinrichtung zur Eingabe von Informationen auch als Touch-Screen ausgebildet.

Bei der in Rede stehenden Anzeigeeinrichtung ist es ferner vorgesehen, daß der Monitor zwischen einer Parkstellung und einer Funktionsstellung verstellbar ist. Hierfür ist dem Monitor eine Verstellkinematik zugeordnet, die alle zum Verstellen des Monitors erforderlichen Komponenten, insbesondere eine Monitoraufhängung und einen Verstellantrieb aufweist. Bei in der Parkstellung befindlichem Monitor ist der Monitor üblicherweise im Armaturenbrett versenkt angeordnet und für die Fahrzeuginsassen nicht sichtbar. Bei in der Funktionsstellung befindlichem Monitor ist der Monitor so positioniert, daß die gewünschten Informationen durch die Fahrzeuginsassen bequem abgelesen werden können.

Eine Anzeigeeinrichtung (DE 10 2005 052 031 A1), weist einen oben geschriebenen Verstellantrieb auf. Der Verstellantrieb ist als Ritzel-Zahnstangen-Antrieb ausgestaltet, der eine lineare Verstell bewegung auf den Monitor überträgt. Der Monitor ist über eine Gelenkanordnung so aufgehängt, daß sich der linearen Bewegung eine Schwenkbewegung überlagert.

Eine andere Anzeigeeinrichtung (EP 0 438 657 A2) weist einen Seilantrieb für den Monitor auf. Nachteilig ist bei der dortigen Konstruktion, dass lediglich eine lineare Antriebsbewegung erzeugbar ist.

Die bekannte Anzeigeeinrichtung (DE 10 2005 023 578 B3), von der die Erfindung ausgeht, weist einen als Riemenantrieb ausgestalteten Verstellantrieb auf. Der Monitor ist hier über eine langlochartige Kupplung mit dem Antriebsriemen verbunden.

Nachteilig bei der bekannten Anzeigeeinrichtung ist deren struktureller Aufbau, der eine Vormontage einzelner Baugruppen der Anzeigeeinrichtung nicht erlaubt. Der zeitliche Aufwand für die Montage ist entsprechend hoch.

Der Erfindung liegt das Problem zugrunde, die bekannte Anzeigeeinrichtung so auszugestalten und weiterzubilden, daß deren struktureller Aufbau optimiert ist.

Das obige Problem wird bei einer Anzeigeeinrichtung gemäß dem Oberbegriff von Anspruch 1 durch die Merkmale des kennzeichnenden Teils von Anspruch 1 gelöst.

Vorzugsweise bilden der Verstellantrieb und die Verschiebeführung zusammen eine vormontierbare bauliche Einheit, die als solche bei der Endmontage mit der Verstellkinematik im übrigen koppelbar ist. Dies erlaubt es, den Verstellantrieb zusammen mit der Verschiebeführung separat von der Verstellkinematik im übrigen vorzumontieren und anschließend in die Anzeigeeinrichtung im übrigen einzusetzen. Damit sind parallele Montageschritte möglich, was zu einer Beschleunigung bei der Montage insgesamt führt. Ferner ist es denkbar, den Verstellantrieb zusammen mit der Verschiebeführung als vormontierte Baueinheit von einem externen Zulieferer zu beziehen.

Vorschlagsgemäß ist der Verstellantrieb als Seilantrieb ausgestaltet. Damit läßt sich insbesondere ein geräuscharmer Betrieb erreichen. Ferner ist der Wartungaufwand für die Anzeigeeinrichtung minimal.

Es wird eine Anzeigeeinrichtung beansprucht, bei der der Verstellantrieb als Seilantrieb ausgestaltet ist, wobei auf die Ausgestaltung als vormontierbare Einheit verzichtet werden kann. Auf die Ausführungen zum Seilantrieb darf in vollem Umfange verwiesen werden.

Im folgenden wird die Erfindung anhand einer lediglich Ausführungsbeispiele darstellenden Zeichnung näher erläutert. In der Zeichnung zeigt
- Fig. 1: in einer perspektivischen Darstellung den Bereich des Armaturenbretts eines Kraftfahrzeuges,
- Fig. 2: in einer Seitenansicht eine vorschlagsgemäße Anzeigeeinrichtung in der Parkstellung,
- Fig. 3: die Anzeigeeinrichtung gemäß Fig. 2 in einer Zwischenstellung,
- Fig. 4: die Anzeigeeinrichtung gemäß Fig. 2 in der Funktionsstellung,
- Fig. 5: in einer Seitenansicht eine Anzeigeeinrichtung in einer dem technischen Hintergrund zuzuordnenden Ausführungsform in der Parkstellung,
- Fig. 6: in einer perspektivischen Darstellung den Verstellantrieb der Anzeigeeinrichtung gemäß Fig. 5 im teilweise demontierten Zustand,
- Fig. 7: in einer perspektivischen Ansicht eine vorschlagsgemäße Anzeigeeinrichtung in einer weiteren, dem technischen Hintergrund zuzuordnenden Ausführungsform in der Parkstellung und
- Fig. 8: die Anzeigeeinrichtung gemäß Fig. 7 in der Funktionsstellung.

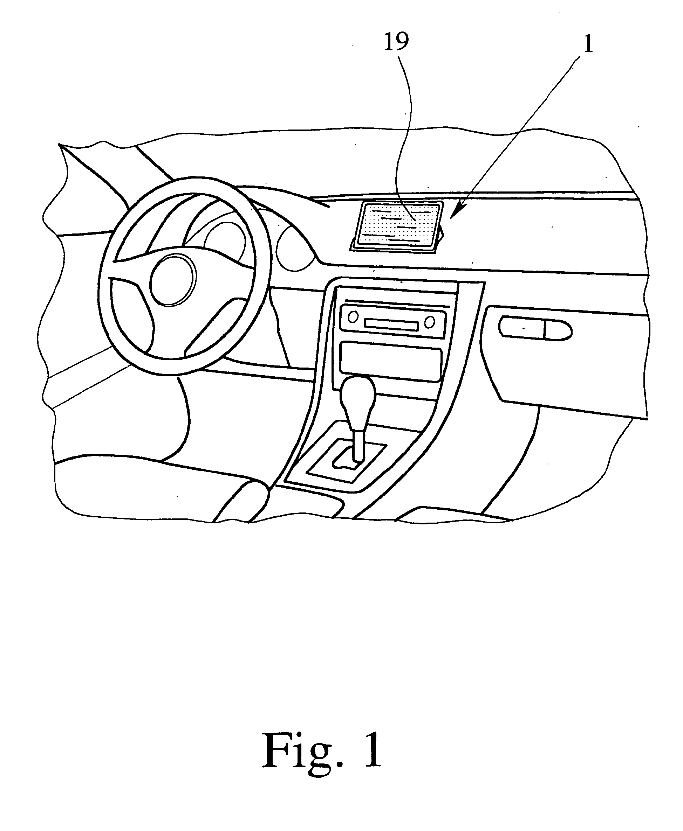

Das in Fig. 1 dargestellte Armaturenbrett eines Kraftfahrzeugs ist mit den üblichen Komponenten wie Lenkrad, Schalthebel, etc. ausgestaltet. Ferner ist der Monitor 1 einer Anzeigeeinrichtung gezeigt. Der Monitor 1 ist zwischen einer Parkstellung und einer in Fig. 1 dargestellten Funktionsstellung verstellbar. Hierfür ist eine Verstellkinematik vorgesehen.

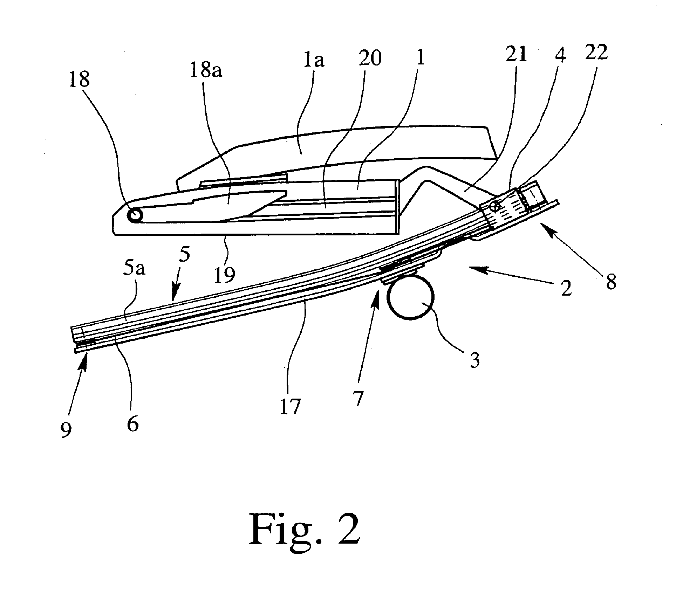

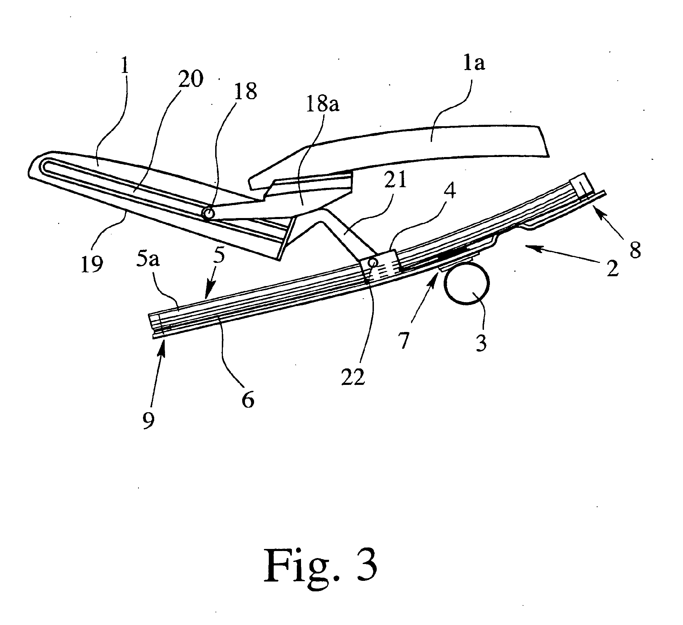

Die Verstellkinematik umfaßt alle Komponenten, die für die Verstellung des Monitors 1 erforderlich sind. Hierfür gehört u.a. ein Verstellantrieb 2 mit Antriebsmotor 3, der in den Fig. 2 bis 8 in drei bevorzugten Ausführungsformen dargestellt ist. Es läßt sich der Darstellung in Fig. 1 entnehmen, daß der in der Funktionsstellung befindliche Monitor 1 so positioniert ist, daß sich Informationen durch die Fahrzeuginsassen leicht ablesen lassen. Der in der Parkstellung befindliche Monitor 1 ist im Armaturenbrett versenkt und entsprechend nicht sichtbar. Dies wird im folgenden noch ausgeführt.

Je nach Anwendungsfall kann der Monitor 1 zur Eingabe von Informationen mit Bedienelementen ausgestattet sein. Es ist auch denkbar, daß der Monitor 1 als Touch-Screen ausgestaltet ist. In beiden Fällen dient der Monitor 1 nicht nur zur Darstellung von Informationen, sondern eben auch zur Eingabe von Informationen.

Es darf vorab darauf hingewiesen werden, daß die Verstellkinematik des Monitors 1 bei allen dargestellten Ausführungsformen so getroffen ist, daß der Monitor 1 verschiebbar und gleichzeitig verschwenkbar ist. Dabei fährt der Monitor 1 bei der Verstellung von der Parkstellung in die Funktionsstellung unter einer Monitorabdeckung 1a hervor. Dies wird weiter unten noch erläutert.

Bei allen dargestellten und insoweit bevorzugten Ausführungsformen ist es ferner so, daß der Verstellantrieb 2 einen Mitnehmer 4 aufweist und über den Mitnehmer 4 antriebstechnisch mit dem Monitor 1 gekoppelt ist. Der Mitnehmer 4 stellt also den Abtrieb des Verstellantriebs 2 bereit. Für die Realisierung des Mitnehmers 4 sind zahlreiche Varianten denkbar. Wesentlich ist nur, daß über den Mitnehmer 4 die Antriebsbewegungen des Verstellantriebs 2 ausgeleitet werden können.

Es ist ferner eine Verschiebeführung 5 vorgesehen, wobei der Mitnehmer 4 hier mittels der Verschiebeführung 5 geführt ist. Dafür ist der Mitnehmer 4 als Schlitten ausgestaltet. Bei der Verschiebeführung kann es sich um eine Führung entlang einer geraden Bahn oder um eine Führung entlang einer gebogenen Bahn handeln. Dies wird weiter unten noch erläutert.

Wesentlich ist bei allen dargestellten und insoweit bevorzugten Ausführungsformen, daß der Verstellantrieb 2 und die Verschiebeführung 5 zusammen eine vormontierbare bauliche Einheit bilden und bei der Endmontage mit der Verstellkinematik im übrigen verbindbar sind. Die hiermit verbundenen Vorteile wurden im einleitenden Teil der Beschreibung erläutert.

Bei der in den Fig. 2 bis 4 dargestellten Ausführungsform ist der Verstellantrieb 2 als Seilantrieb mit einem Antriebsseil 6 ausgestaltet, wobei das Antriebsseil 6 über den Mitnehmer 4 antriebstechnisch mit dem Monitor 1 gekoppelt ist. Dabei ist es insbesondere so, daß der Antriebsmotor 3 mit dem Antriebsseil 6 über eine Seiltrommel 7 antriebstechnisch gekoppelt ist. Das Antriebsseil 6 wird bei einer motorischen Verstellung des Monitors 1 vorzugsweise einerends auf die Seiltrommel 7 aufgewickelt und anderenends von der Seiltrommel 7 abgewickelt.

Das Antriebsseil 6 läuft dabei vorzugsweise über zwei voneinander beabstandete Umlenkmittel 8, 9, bei denen es sich weiter vorzugsweise um Umlenkrollen 8, 9 oder Umlenkbolzen handelt. Das Antriebsseil 6 ist hier von der Seiltrommel 7 über die beiden Umlenkmittel 8, 9 zurück zur Seiltrommel 7 geführt. Bei einer motorischen Verstellung der Seiltrommel 7 bewegt sich das Antriebsseil 6 über die beiden Umlenkmittel 8, 9. Dadurch, daß der Mitnehmer 4 am Antriebsseil 6 befestigt ist, wird der Mitnehmer 4 entsprechend mitbewegt.

Bei dem Antriebsseil 6 kann es sich um ein Metalldrahtseil, um ein Kunststoffseil o. dgl. handeln. Insbesondere im Falle der Ausgestaltung des Antriebsseils 6 als Kunststoffseil können in vorteilhafter Weise die oben beschriebenen Umlenkbolzen Anwendung finden.

Die Verschiebeführung 5 weist hier ein Führungsprofil 5a auf, das formschlüssig mit dem Mitnehmer 4 in Eingriff steht. Hierbei kann es sich um eine Schwalbenschwanzführung o. dgl. handeln.

Bei der in den Fig. 2 bis 4 dargestellten und insoweit bevorzugten Ausführungsform ist es so, daß das Antriebsseil 6 neben der Verschiebeführung 5 her läuft. Grundsätzlich kann es aber auch vorgesehen sein, daß das Antriebsseil 6 innerhalb der Verschiebeführung 5, insbesondere in speziell dafür vorgesehenen Nuten, verläuft.

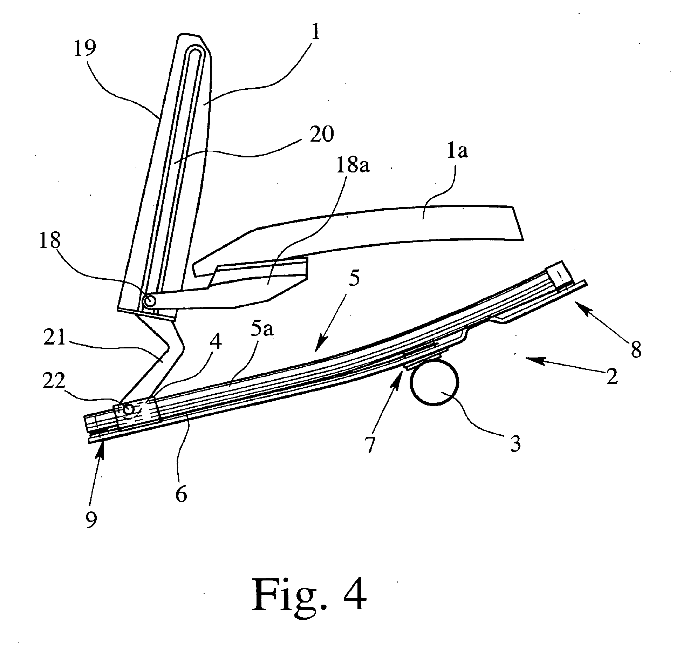

Es läßt sich der Darstellung in den Fig. 2 bis 4 ferner entnehmen, daß die Verschiebeführung 5 gebogen ausgestaltet ist, wobei die Biegeachse in Fig. 4 senkrecht zur Zeichnungsebene ausgerichtet ist. Auch dies wird weiter unten noch erläutert.

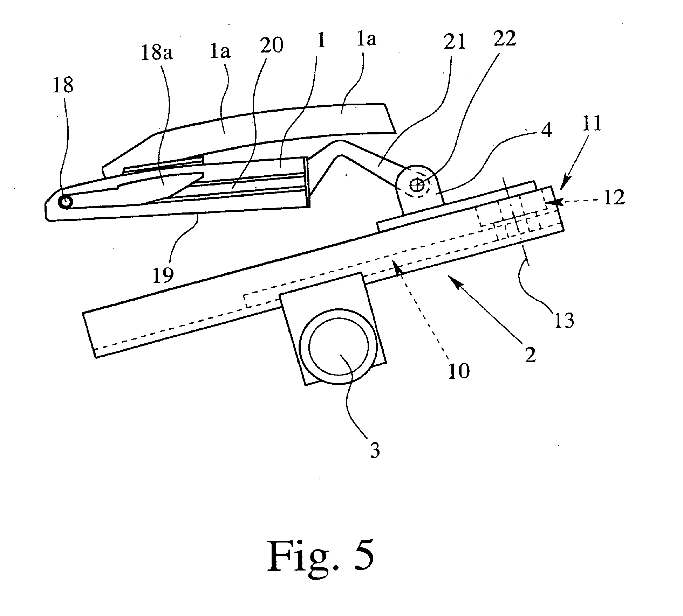

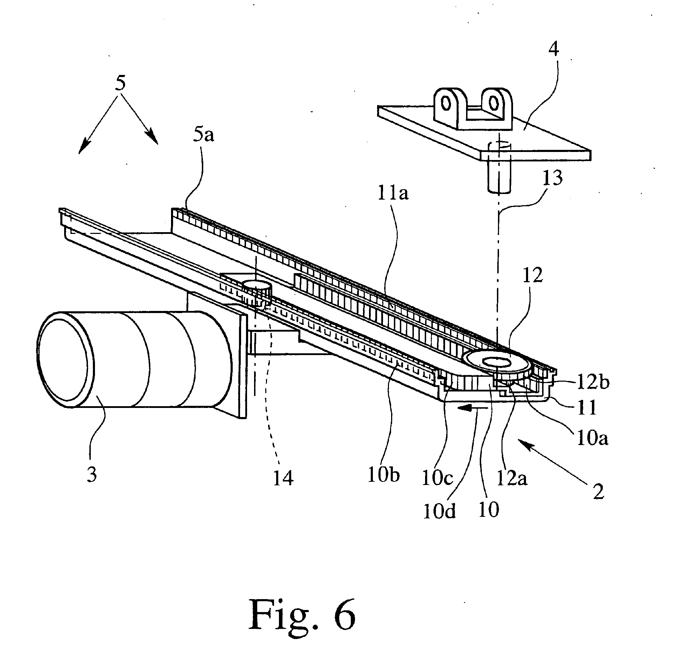

In den Fig. 5 und 6 ist eine dem technischen Hintergrund zuordnende Ausgestaltung eines Verstellantriebs 2 dargestellt, mit dem sich ähnliche Antriebsbewegungen wie mit dem in den Fig. 2 bis 4 dargestellten Verstellantrieb 2 erzeugen lassen. Hier handelt es sich um eine spezielle Form eines Ritzel-Zahnstangen-Antriebs.

Zunächst darf darauf hingewiesen werden, daß vorliegend auch ein konventionell aufgebauter Ritzel-Zahnstangen-Antrieb Anwendung finden kann. Dabei ist der Antriebsmotor 3 mit einem Ritzel ausgestattet, das mit einer Zahnstangenanordnung kämmt. Die Zahnstangenanordnung stellt dabei den. Mitnehmer 4 in obigem Sinne dar. Vorteilhaft ist bei einem solchen Ritzel-Zahnstangen-Antrieb grundsätzlich, daß die Verschiebeführung 5 bereits integraler Bestandteil des Verstellantriebs 2 ist. Eine separate Verschiebeführung 5, wie sie bei der in den Fig. 2 bis 4 dargestellten Ausführungsform gezeigt ist, muß nicht realisiert werden. Der oben beschriebene, konventionelle Ritzel-Zahnstangen-Antrieb hat den Nachteil, daß der benötigte Bauraum in Richtung der Antriebsbewegung vergleichsweise groß ist.

Einen optimierten Ritzel-Zahnstangen-Antrieb zeigen die Fig. 5 und 6. Hier ist es vorgesehen, daß der Verstellantrieb 2 eine erste Zahnstangenanordnung 10 und parallel dazu eine zweite Zahnstangenanordnung 11 aufweist. Es ist ferner ein Laufritzel 12 vorgesehen, das mit den Verzahnungen 10a, 11a der beiden Zahnstangen 10, 11 kämmt und das über einen Mitnehmer 4 mit dem Monitor 1 gekoppelt ist. Es läßt sich der Darstellung in Fig. 6 entnehmen, daß die Anordnung so getroffen ist, daß eine Verschiebung der ersten Zahnstangenanordnung 10 parallel zu der zweiten Zahnstangenanordnung 11 eine Verschiebung der geometrischen Drehachse 13 des Laufritzels 12 parallel zu den Zahnstangen 10, 11 bewirkt. Im Ergebnis bewirkt diese Verschiebung der ersten Zahnstangenanordnung über den Mitnehmer 4 eine Verstellung des Monitors 1.

Hier ist es so, daß der Antriebsmotor 3 über ein Antriebsritzel14 mit der ersten Zahnstangenanordnung 10 antriebstechnisch gekoppelt ist, wobei die zweite Zahnstangenanordnung 11 weiter vorzugsweise festgelegt ist. Die antriebstechnische Kopplung des Antriebsritzels 14 mit der ersten Zahnstangenanordnung 10 ist dadurch realisiert, daß die erste Zahnstangenanordnung 10 eine zusätzliche Verzahnung 10b aufweist, die mit dem Antriebsritzel 14 kämmt.

Die zweite Zahnstangenanordnung 11 ist hier im Querschnitt im wesentlichen U-förmig ausgestaltet und nimmt die erste Zahnstangenanordnung 10 sowie das Laufritzel 12 auf. Die zweite Zahnstangenanordnung 11 weist ein Führungsprofil 5a auf, mit dem der Mitnehmer 4 formschlüssig in Eingriff steht. Hierdurch ist in einfacher Weise die Verschiebeführung 5 realisiert.

Mit der in den Fig. 5 und 6 dargestellten Ausgestaltung des Ritzel-Zahnstangen-Antriebs läßt sich erreichen, daß die zu verstellende erste Zahnstangenanordnung 10 unter keinen Umständen über den Verstellbereich des Mitnehmers 4 hinausragt. Dies wird dadurch erreicht, daß das Laufritzel 12 einen ersten Ritzelabschnitt 12a aufweist, der der ersten Zahnstangenanordnung 10 zugeordnet ist und daß das Laufritzel 12 einen zweiten Ritzelabschnitt 12b aufweist, der der zweiten Zahnstangenanordnung 11 zugeordnet ist. Hier ist es so, daß der Durchmesser des ersten Ritzelabschnitts 12a unterschiedlich ist zu dem Durchmesser des zweiten Ritzelabschnitts 12b, und daß der Durchmesser des ersten Ritzelabschnitts 12a kleiner ist als der Durchmesser des zweiten Ritzelabschnitts 12b und schließlich, daß der Durchmesser des ersten Ritzelabschnitts 12a die Hälfte des Durchmessers des zweiten Ritzelabschnitts 12b beträgt. Im letztgenannten Fall beträgt die Länge der ersten Zahnstangenanordnung 10 etwa die Hälfte der Länge der zweiten Zahnstangenanordnung 11, so daß sich die erste Zahnstangenanordnung 10 stets innerhalb der zweiten Zahnstangenanordnung 11 befindet.

Bei der in den Fig. 5 und 6 dargestellten Ausführungsform ist es zwar so, daß die erzeugte Antriebsbewegung eine gerade Bewegung ist. Grundsätzlich ist es aber auch denkbar, den Ritzel-Zahnstangen-Antrieb gebogen auszugestalten, so daß entsprechend eine gebogene Antriebsbewegung erzeugbar ist.

Die in den Fig. 5 und 6 dargestellte Ausführungsform zeigt noch eine weitere Besonderheit, indem die Zahnstangenanordnungen 10, 11 in einem kleinen Verstellbereich, vorzugsweise bei in der Funktionsstellung befindlichem Monitor 1, von der zueinander parallelen Anordnung abweichen.

Dabei weist die zusätzliche Verzahnung 10b der ersten Zahnstangenanordnung 10 an ihrem einen Ende einen Verzahnungsabschnitt 10c auf, der entlang einer gebogenen Bahn verläuft.

Bei der Verstellung des Monitors 1 in die Funktionsstellung läuft die Verzahnung 10b der ersten Zahnstangenanordnung 10 - parallel zu der Verzahnung 11a der zweiten Zahnstangenanordnung 11 - am Ritzel 14 entlang, bis der Verzahnungsabscbnitt 10c erreicht ist. In dieser Stellung befindet sich das Laufritzel 12 bereits im Bereich des in Fig. 6 linken Endes der ersten Zahnstangenanordnung 10. Eine nicht dargestellte Kulissenführung bewirkt bei weiterer Verstellung, daß das in Fig. 6 rechte Ende der Zahnstangenanordnung 10 zusätzlich in Richtung des Pfeils 10d, also quer zur Antriebsbewegung, verstellt wird. Das in Fig. 6 linke Ende der ersten Zahnstangenanordnung 10 folgt dieser Querverstellung nicht, so daß die erste Zahnstangenanordnung 10 mit der zweiten Zahnstangenanordnung 11 einen Winkel einschließt.

Schließlich erreicht die erste Zahnstangenanordnung 10 eine Stellung, bei der das Ritzel 14 am Ende der Verzahnung 10b liegt und eine Rückstellung des Monitors 1 in Richtung der Parkstellung verhindert. Dies ist eine einfache Lösung zur Fixierung des Monitors 1 in der Funktionsstellung.

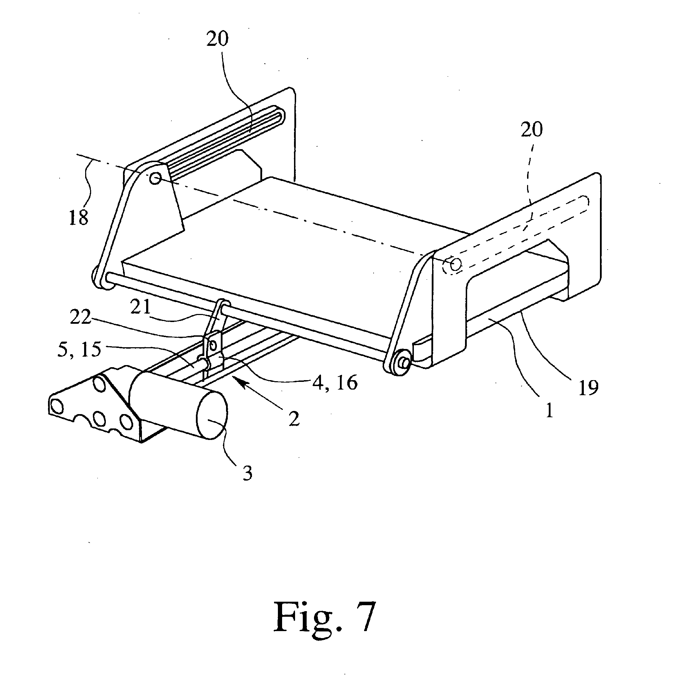

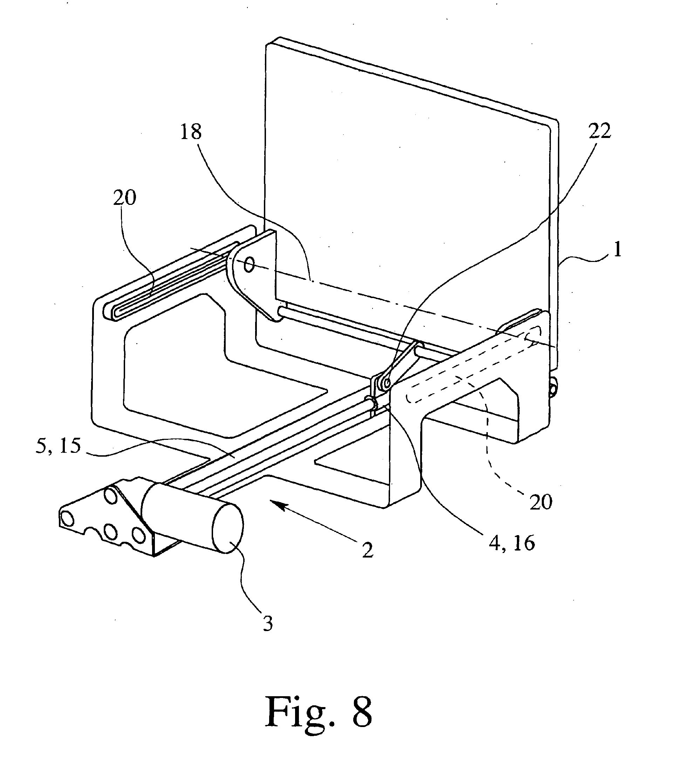

Die Fig. 7 und 8 zeigen eine weitere, dem technischen Hintergrund zuzuordnende Ausführungsform, bei der der Verstellantrieb 2 als Spindelantrieb mit Antriebsspindel 15 und Spindelmutter 16 ausgestaltet ist. Hier übernimmt die Spindelmutter 16 die Funktion des Mitnehmers 4 in obigem Sinne und ist entsprechend antriebstechnisch mit dem Monitor 1 gekoppelt.

Hier ist es so, daß der Antriebsmotor 3 mit der Antriebsspindel 15 gekoppelt ist. Grundsätzlich kann es aber auch vorgesehen sein, daß der Antriebsmotor 3 antriebstechnisch mit der Spindelmutter 16 gekoppelt ist.

Besonders vorteilhaft bei dem als Spindelantrieb ausgestalteten Verstellantrieb 2 ist, ähnlich wie bei dem Ritzel-Zahnstangen-Antrieb, die Tatsache, daß die Verschiebeführung 5 von dem Spindelantrieb selbst bereitgestellt wird. Hier ist es so, daß der Eingriff zwischen Antriebsspindel 15 und Spindelmutter 16 die Verschiebeführung 5 bereitstellt.

Im Hinblick auf die Ausgestaltung des Verstellantriebs 2 läßt sich zusammenfassen, daß der Verstellantrieb 2 und die Verschiebeführung 5 bei allen dargestellten Ausführungsformen zusammen eine vormontierbare bauliche Einheit bilden, die als solche bei der Endmontage mit der Verstellkinematik im übrigen koppelbar ist.

Bei der in den Fig. 2 bis 4 dargestellten Ausführungsform ist der gesamte Verstellantrieb 2 einschließlich der Verschiebeführung 5 auf einem Antriebsträger 17 angeordnet und läßt sich mittels des Antriebsträgers 17 als bauliche Einheit montieren und demontieren.

Bei der in den Fig. 5 und 6 dargestellten Ausführungsform ist der gesamte Verstellantrieb 2 einschließlich der Verschiebeführung 5 an bzw. in der zweiten Zahnstangenanordnung 11 angeordnet. Entsprechend läßt sich der gesamte Verstellantrieb 2 einschließlich der Verschiebeführung 5 über die zweite Zahnstangenanordnung 11 als bauliche Einheit montieren bzw. demontieren.

Bei der in den Fig. 7 und 8 dargestellten Ausführungsform läßt sich der gesamte Spindelantrieb vormontieren, da der Antriebsmotor 3, beide Spindellager (nicht dargestellt) sowie die Spindelmutter 16 an der Antriebsspindel 15 angeordnet sind.

Es läßt sich im Hinblick auf die Ausgestaltung des Verstellantriebs 2 ferner zusammenfassen, daß der Verstellantrieb 2 bei allen dargestellten Ausführungsformen im wesentlichen als Linearantrieb ausgestaltet ist, wobei die erzeugte Antriebsbewegung bei der in den Fig. 2 bis 4 dargestellten Ausführungsform geringfügig gebogen ist. Der Begriff "Linearantrieb" ist entsprechend weit zu verstehen.

Weiter darf im Hinblick auf die Ausgestaltung des Verstellantriebs 2 noch darauf hingewiesen werden, daß zwischen den Antriebsmotor 3 und die jeweils angetriebene Antriebskomponente (Seiltrommel 7, Zahnstangenanordnung 10, Antriebsspindel 15) auch ein Zwischengetriebe geschaltet sein kann. Bei diesem Zwischengetriebe kann es sich beispielsweise um ein Stirnradgetriebe, um ein Kegelradgetriebe oder um ein Planetenradgetriebe handeln.

Schließlich darf im Hinblick auf die Ausgestaltung des Verstellantriebs 2 noch darauf hingewiesen werden, daß der Verstellantrieb 2 vorzugsweise nicht selbsthemmend ausgestaltet ist. Dies hat den Vorteil, daß der Monitor 1 auch manuell zumindest in Richtung der Parkstellung verstellt werden kann. Grundsätzlich ist es dabei denkbar, daß eine solche manuelle Verstellung des Monitors 1 steuerungstechnisch erkannt und in eine motorische Verstellung des Monitors 1 in die Parkstellung überführt wird. Bei einer solchen nicht selbsthemmenden Ausgestaltung des Verstellantriebs ist es vorteilhaft, wenn die innerhalb des Antriebsstrangs wirkende Reibung groß genug ist, um den Monitor 1 in jeder Stellung, insbesondere in der Funktionsstellung zu halten.

Bei allen dargestellten Ausführungsformen ist die Verstellkinematik jeweils mit einer Aufhängung für den Monitor 1 ausgestattet, wobei die jeweiligen Aufhängungen prinzipiell ähnlich ausgestaltet sind.

Dabei ist es vorzugsweise so, daß der Monitor 1 um eine vorzugsweise parallel verschiebbare Schwenkachse 18 schwenkbar ist, wobei die Schwenkachse 18 weiter vorzugsweise parallel zu der Anzeigefläche 19 des Monitors 1 ausgerichtet ist. Bei der in den Fig. 2 bis 4 dargestellten Ausführungsform ist die Schwenkachse 18 des Monitors 1 an einem Schwenkachsenträger 18a festgelegt. Dabei läßt sich der Monitor 1 mittels einer Kulissenführung 20 gewissermaßen an der Schwenkachse 18 vorbei bewegen. Dies ergibt sich aus einer Zusammenschau der Fig. 2 bis 4. Die gleiche Art der Aufhängung zeigt sich bei der in den Fig. 5 und 6 dargestellten Ausführungsform.

Etwas anders sieht es bei der in den Fig. 7 und 8 dargestellten Ausführungsform aus. Hier ist die Schwenkachse 18 starr mit dem Monitor 1 verbunden und in einer Kulissenführung 20 verschiebbar. Dies bedeutet, daß sich bei der in den Fig. 7 und 8 dargestellten Ausführungsform die Schwenkachse 18 beim Durchlaufen der Kulissenführung 20 mit verschiebt.

Bei allen dargestellten Ausführungsformen ist es so, daß eine Verstellung des Mitnehmers 4 bewirkt, daß die Schwenkachse 18 die Kulissenführung 20 durchläuft. Dadurch wird der Monitor 1 verschoben und gleichzeitig oder erst nach Auflaufen auf einen Anschlag o. dgl. verschwenkt.

Die Kombination der Verschwenkbarkeit des Monitors 1 um die Schwenkachse 18 mit der im wesentlichen linearen Antriebsbewegung des Verstellantriebs 2 ist vorzugsweise dadurch realisierbar, daß der Monitor 1 mit dem Mitnehmer 4, hier und vorzugsweise über einen Antriebshebel 21, schwenkbar gekoppelt ist.

Im Sinne einer optimalen Übertragung der Antriebskraft des Verstellantriebs 2 ist es vorzugsweise vorgesehen, daß die Verschiebeführung 5 senkrecht zu der Schwenkachse 18 des Monitors 1 ausgerichtet ist. Ferner ist es vorzugsweise so, daß der Verstellantrieb 2, insbesondere der Mitnehmer 4, über die Breite des Monitors 1 gesehen im wesentlichen mittig angeordnet ist.

Um das automatische Verschwenken des Monitors 1 auf einfache Weise zu realisieren, ist es weiter vorzugsweise vorgesehen, daß der Verstellantrieb 2 derart mit dem Monitor 1 gekoppelt ist, daß die Kraftwirkungslinie der Antriebskraft des Verstellantriebs 2 zumindest in der Funktionsstellung von der Schwenkachse 18 des Monitors 1 beabstandet ist. Dies ist bei allen dargestellten Ausführungsformen der Fall.

Es wurde bereits darauf hingewiesen, daß die von dem Verstellantrieb 2 erzeugte Antriebsbewegung gerade oder gebogen sein kann. Im einzelnen ist es so, daß sich der Koppelpunkt 22 zwischen dem Mitnehmer 4 und dem Monitor 1 bzw. dem mit dem Monitor 1 gekoppelten Antriebshebel 21 bei der Verstellung des Monitors 1 entlang einer Antriebsbahn bewegt, wobei diese Antriebsbahn vorschlagsgemäß einen gekrümmten Verlauf aufweist und wobei die Krümmungsachse vorzugsweise parallel zu der Schwenkachse 18 des Monitors 1 ausgerichtet ist. Dabei handelt es sich nicht notwendigerweise um eine kreisförmige Antriebsbahn. Die obige Angabe der Krümmungsachse dient nur dem Zweck, die grobe Richtung der Krümmung zu definieren.

Während die Ausrichtung des Monitors 1 in der Funktionsstellung im wesentlichen dadurch festgelegt ist, daß die gewünschten Informationen durch die Fahrzeuginsassen gut ablesbar sein sollen, bestehen für die Positionierung des Monitors 1 in der Parkstellung eine Reihe von Möglichkeiten. In besonders bevorzugter Ausgestaltung ist es vorgesehen, daß sich der Monitor 1 in der Park stellung in einer liegenden Position befindet, in der der Monitor 1 im wesentlichen horizontal ausgerichtet ist. Diese Angabe bezieht sich auf die Anzeigeeinrichtung im eingebauten Zustand.

Schließlich darf noch darauf hingewiesen werden, daß der Verstellantrieb 2 seiner Bauart nach vorzugsweise ein Fensterheberantrieb ist. Die Kompaktheit solcher Fensterheberantriebe stellt für den vorliegenden Anwendungsfall einen ganz besonderen Vorteil dar.

Die vorschlagsgemäße Lehre der Erfindung betrifft eine Anzeigeeinrichtung mit einem als Seilantrieb ausgestalteten Verstellantrieb 2, wobei es auf die oben erläuterte Realisierung einer vormontierbaren baulichen Einheit jeweils nicht unbedingt ankommt. Es darf darauf hingewiesen werden, daß alle erläuterten Varianten und Vorteile für sich genommen oder in Kombination auf alle drei weiteren eigenständigen Lehren anwendbar sind.

## Patentansprüche

1. Anzeigeeinrichtung in einem Kraftfahrzeug mit einem verstellbaren Monitor (1) und einer dem Monitor (1) zugeordneten Verstellkinematik, wobei die Verstellkinematik einen Verstellantrieb (2) mit Antriebsmotor (3) für den Monitor (1) aufweist, wobei der Monitor (1) mittels des Verstellantriebs (2) zwischen einer Parkstellung und einer Funktionsstellung verstellbar ist, wobei der Monitor (1) un eine ggf. parallel verschiebbare Schwenkachse (18) schwenkbar ist, wobei der Verstellantrieb (2) einen Mitnehmer (4) aufweist und über den Mitnehmer (4) antriebstechnisch mit dem Monitor (1) gekoppelt ist und wobei eine Verschiebeführung (5) vorgesehen ist und der Mitnehmer (4) mittels der Verschiebeführung (5) geführt ist,
**dadurch gekennzeichnet,**
**dass** der Mitnehmer (4) als Schlitten ausgestaltet ist, dass die Verschiebeführung (5) gekrümmt ausgestaltet ist, dass sich der Koppelpunkt (22) zwischen dem Mitnehmer (4) und dem Monitor (1) bei der Verstellung des Monitors (1) entlang einer Antriebsbahn bewegt, die einen gekrümmten Verlauf aufweist, dass die Krümmungsachse vorzugsweise parallel zu der Schwenkachse (18) des Monitors (1) ausgerichtet ist, dass der Verstellantrieb (2) als Seilantrieb mit einem Antriebsseil (6) ausgestaltet ist und dass das Antriebsseil (6) über den Mitnehmer (4) antriebstechnisch mit dem Monitor (1) gekoppelt ist.

2. Anzeigeeinrichtung nach Anspruch 1, **dadurch gekennzeichnet, dass** das Antriebsseil (6) innerhalb der Verschiebeführung (5), insbesondere in speziell dafür vorgesehenen Nuten, verläuft.

3. Anzeigeeinrichtung nach Anspruch 1 oder 2, **dadurch gekennzeichnet, dass** der Verstellantrieb (2) und die Verschiebeführung (5) zusammen eine vormontierbare bauliche Einheit bilden, die als solche bei der Endmontage mit der Verstellkinematik im übrigen koppelbar ist,

4. Anzeigeeinrichtung nach Anspruch 3, **dadurch gekennzeichnet, dass** der Antriebsmotor (3) mit dem Antriebsseil (6) über eine Seiltrommel (7) antriebstechnisch gekoppelt ist.

5. Anzeigeeinrichtung nach Anspruch 4, **dadurch gekennzeichnet, dass** der Verstellantrieb (2) zwei voneinander beabstandete Umlenkmittel (8, 9), vorzugsweise Umlenkrollen (8, 9) oder Umlenkbolzen, aufweist und dass das Antriebsseil (6) von der Seiltrommel (7) über die beiden Umlenkmittel (8, 9) zurück zur Seiltrommel (7) geführt ist.

6. Anzeigeeinrichtung nach einem der Ansprüche 3 bis 5, **dadurch gekennzeichnet, dass** die Schwenkachse (18) parallel zu der Anzeigefläche (19) des Monitors (1) ausgerichtet ist.

7. Anzeigeeinrichtung nach einem der Ansprüche 3 bis 6, **dadurch gekennzeichnet, dass** der Monitor (1) mit dem Mitnehmer (4), vorzugsweise über einen Abtriebshebel (21), schwenkbar gekoppelt ist.

8. Anzeigeeinrichtung nach einem der Ansprüche 3 bis 7, **dadurch gekennzeichnet, dass** die Verschiebeführung (5) senkrecht zu der Schwenkachse (18) des Monitors (1) ausgerichtet ist.

9. Anzeigeeinrichtung nach einem der Ansprüche 3 bis 8, **dadurch gekennzeichnet, dass** der Verstellantrieb (2) derart mit dem Monitor (1) gekoppelt ist, dass die Kraftwirkungslinie der Antriebskraft des Verstellantriebs (2) zumindest in der Funktionsstellung von der Schwenkachse (18) des Monitors (1) beabstandet ist.

10. Anzeigeeinrichtung nach einem der Ansprüche 3 bis 9; **dadurch gekennzeichnet, dass** sich der Monitor (1) in der Parkstellung in einer liegenden Position befindet, in der der Monitor (1) im wesentlichen horizontal ausgerichtet ist.

11. Anzeigeeinrichtung nach einem der Ansprüche 3 bis 10, **dadurch gekennzeichnet, dass** der Verstellantrieb (2) seiner Bauart nach ein Fensterheberantrieb ist.

## Claims

1. Display device in a motor vehicle having an adjustable monitor (1) and adjustment kinematics which are assigned to the monitor (1), wherein the adjustment kinematics have an adjustment drive (2) with a drive motor (3) for the monitor (1), wherein the monitor (1) can be adjusted between a parked position and a functional position by means of the adjustment drive (2), wherein the monitor (1) can be pivoted about a pivoting axis (18) which can, if appropriate, be displaced in parallel, wherein the adjustment drive (2) has a driver (4) and is coupled in terms of drive technology to the monitor (1) via the driver (4), and wherein a displacement guide (5) is provided, and the driver (4) is guided by means of the displacement guide (5),
**characterized**
**in that** the driver (4) is configured as a carriage, in that the displacement guide (5) is of curved configuration, in that during the adjustment of the monitor (1) the coupling point (22) between the driver (4) and the monitor (1) moves along a drive path which has a curved profile, in that the curvature axis is oriented preferably parallel with respect to the pivoting axis (18) of the monitor (1), in that the adjustment drive (2) is configured as a cable drive with a drive cable (6) and in that the drive cable (6) is coupled in terms of drive technology to the monitor (1) via the driver (4).

2. Display device according to Claim 1, **characterized in that** the drive cable (6) runs within the displacement guide (5), in particular in grooves which are specially provided for this purpose.

3. Display device according to Claim 1 or 2, **characterized in that** the adjustment drive (2) and the displacement guide (5) together form one premounted structural unit which, furthermore, can be coupled as such to the adjustment kinematics during the final assembly.

4. Display device according to Claim 3, **characterized in that** the drive motor (3) is coupled in terms of drive technology to the drive cable (6) via a cable drum (7).

5. Display device according to Claim 4, **characterized in that** the adjustment drive (2) has two deflection means (8, 9) spaced apart from one another, preferably deflection rollers (8, 9) or deflection bolts, and **in that** the drive cable (6) is guided from the cable drum (7) and back to the cable drum (7) via the two deflection means (8, 9).

6. Display device according to one of Claims 3 to 5, **characterized in that** the pivoting axis (18) is oriented parallel to the display face (19) of the monitor (1).

7. Display device according to one of Claims 3 to 6, **characterized in that** the monitor (1) is pivotably coupled to the driver (4), preferably via an output lever (21).

8. Display device according to one of Claims 3 to 7, **characterized in that** the displacement guide (5) is oriented perpendicularly with respect to the pivoting axis (18) of the monitor (1).

9. Display device according to one of Claims 3 to 8, **characterized in that** the adjustment drive (2) is coupled to the monitor (1) in such a way that the force action line of the driving force of the adjustment drive (2) is spaced apart from the pivoting axis (18) of the monitor (1) at least in the functional position.

10. Display device according to one of Claims 3 to 9, **characterized in that** in the parked position the monitor (1) is located in a lying position in which the monitor (1) is oriented essentially horizontally.

11. Display device according to one of Claims 3 to 10, **characterized in that** the adjustment drive (2) is a window lifter drive in terms of its design.

## Revendications

1. Dispositif d'affichage pour un véhicule automobile, comprenant un écran réglable (1) et une cinématique de réglage associée à l'écran (1), la cinématique de réglage présentant un entraînement de réglage (2) avec un moteur d'entraînement (3) pour l'écran (1), l'écran (1) pouvant être réglé au moyen de l'entraînement de réglage (2) entre une position de rangement et une position fonctionnelle, l'écran (1) pouvant pivoter autour d'un axe de pivotement (18) éventuellement déplaçable parallèlement, l'entraînement de réglage (2) présentant un dispositif d'entraînement (4) et étant accouplé par le biais du dispositif d'entraînement (4) par une technique d'entraînement à l'écran (1) et un guide coulissant (5) étant prévu et le dispositif d'entraînement (4) étant guidé au moyen du guide coulissant (5),
**caractérisé en ce que**
le dispositif d'entraînement (4) est réalisé sous forme de chariot, **en ce que** le guide coulissant (5) est configuré sous forme courbe, **en ce que** le point d'accouplement (22) entre le dispositif d'entraînement (4) et l'êcran (1) lors du réglage de l'écran (1) se déplace le long d'une voie d'entraînement qui présente une allure courbe, **en ce que** l'axe de courbure est orienté de préférence parallèlement à l'axe de pivotement (18) de l'écran (1), **en ce que** l'entraînement de réglage (2) est configuré sous forme d'entraînement par câble avec un câble d'entraînement (6) et **en ce que** le câble d'entraînement (6) est accouplé par le biais du dispositif d'entraînement (4) par une technique d'entraînement à l'écran (1).

2. Dispositif d'affichage selon la revendication 1, **caractérisé en ce que** le câble d'entraînement (6) s'étend à l'intérieur du guide coulissant (5), en particulier dans des rainures prévues spécifiquement à cet effet.

3. Dispositif d'affichage selon la revendication 1 ou 2, **caractérisé en ce que** l'entraînement de réglage (2) et le guide coulissant (5) forment conjointement une unité structurelle prémontable qui, en tant que telle, peut être du reste accouplée lors du montage final à la cinématique de réglage.

4. Dispositif d'affichage selon la revendication 3, **caractérisé en ce que** le moteur d'entraînement (3) est accouplé au câble d'entraînement (6) par le biais d'un tambour de câble (7) par une technique d'entraînement.

5. Dispositif d'affichage selon la revendication 4, **caractérisé en ce que** l'entraînement de réglage (2) présente deux moyens de renvoi (8, 9) espacés l'un de l'autre, de préférence des poulies de renvoi (8, 9) ou des goujons de renvoi et **en ce que** le câble d'entrainement (6) est guidé depuis le tambour de câble (7) sur les deux moyens de renvoi (8, 9) à nouveau jusqu'au tambour de câble (7).

6. Dispositif d'affichage selon l'une quelconque des revendications 3 à 5, **caractérisé en ce que** l'axe de pivotement (18) est orienté parallèlement à la surface d'affichage (19) de l'écran (1).

7. Dispositif d'affichage selon l'une quelconque des revendications 3 à 6, **caractérisé en ce que** l'écran (1) est accouplé de manière pivotante au dispositif d'entraînement (4), de préférence par le biais d'un levier de sortie (21).

8. Dispositif d'affichage selon l'une quelconque des revendications 3 à 7, **caractérisé en ce que** le guide coulissant (5) est orienté perpendiculairement à l'axe de pivotement (18) de l'écran (1).

9. Dispositif d'affichage selon l'une quelconque des revendications 3 à 8, **caractérisé en ce que** l'entraînement de réglage (2) est accouplé à l'écran (1) de telle sorte que la ligne d'action de force de la force d'entraînement de l'entraînement de réglage (2) soit espacée de l'axe de pivotement (18) de l'écran (1) au moins dans la position fonctionnelle.

10. Dispositif d'affichage selon l'une quelconque des revendications 3 à 9, **caractérisé en ce que** l'écran (1) se trouve dans une position couchée dans la position de rangement, dans laquelle l'écran (1) est orienté essentiellement horizontalement.

11. Dispositif d'affichage selon l'une quelconque des revendications 3 à 10, **caractérisé en ce que** l'entraînement de réglage (2) est un entraînement de lève-glace d'après sa construction.
